# EUROPEAN PATENT APPLICATION

(11) **EP 3 442 254 A1**
(43) Date of publication of application: **13.02.2019**
(21) Application number: 16897768.4
(22) Date of filing: 06.12.2016
(51) Int. Cl.: H04W 24/08

(54) **DETERMINATION METHOD, DEVICE, AND SYSTEM FOR STARTING CELL MEASUREMENT AND STORAGE MEDIUM**

(30) Priority: 06.04.2016 CN 201610210773
(71) Applicant: ZTE Corporation, Shenzhen, Guangdong 518057 (CN)
(72) Inventor: DU, Ting, Shenzhen Guangdong 518057 (CN)
(74) Representative: Lavoix
(86) International application number: PCT/CN2016/108728
(87) International publication number: WO 2017/173839

(57) **Abstract**

Provided in the present invention are a determination method, device, and system for starting cell measurement. The method comprises: when a terminal is registered to a network, determining the type of the terminal on the basis of identification information of the terminal, where the type of the terminal comprise: a fixed terminal or a mobile terminal; and determining for the terminal on the basis of the type a triggering criterion for starting cell measurement. The present invention solves the problem in the prior art in which requirements on NB-IOT power consumption cannot be satisfied by terminal measurement and reselection/handover solutions, thus saving power while also increasing the flexibility of cell measurement.

## Description

### TECHNICAL FIELD

The disclosure relates to the field of communications, and in particular to a determination method, apparatus and system for starting cell measurement, and a storage medium.

### BACKGROUND

At the 69th Plenary Session of the 3GPP TSG RAN, the Narrow Band Internet of Things (NB-IOT) was established. Requirements of the NB-IOT for the power consumption are lower than the power consumption in 2G, and the standby time of a terminal module may be up to 10 years. It can be known from the existing LTE that User Equipment (UE) in an idle state needs to continuously perform cell reselection after residing on a certain cell, so as to reside on a cell with higher priority or better channel quality. This process needs continuous measurement and comparison. In order to save the electric energy of the UE, corresponding measurement rules are defined in the standard. The overall principle is as follows.

When the UE is in good coverage, the measurement frequency is reduced as much as possible, and it is only necessary to periodically search for a cell with high-priority. If it is found that a certain cell with high-priority cannot meet a reselection condition, the measurement does not need to be continued.

When the UE is in poor coverage, the measurement of the same frequency (Srxlev is compared with a Sintrasearch) and the inter-frequency (Srxlev is compared with a Snonintrasearch) are gradually started.

According to the priority and the comparison amount, a number of different thresholds are defined in the standard to control cell reselection. The basic criteria are as follows.

In order to avoid the ping-pong effect, the UE is required to reside on a serving cell for more than 1 second for all reselections.

If multiple cells with different priorities meet the reselection condition, a cell with high-priority must be reselected; for inter-frequency or heterogeneous system cells with high-priority, when the Srxlev of the cell exceeds a corresponding threshold (Threshx, high) for a period of time (Treselection), reselection can be performed.

If multiple cells with the same priority meet the condition, the best-sorted cell is reselected. For the same-frequency cell or the inter-frequency cell with the same-priority, the serving cell and the neighboring cell are rated according to a cell rating criterion (R criterion), the UE must reselect the best-rated cell.

According to a calculation result of an R value, if a neighboring cell Rn is larger than a serving cell Rs for Treselection, the reselection process to the neighboring cell is triggered, where Rn = an actual value of a Reference Signal Received Power (RSRP) of a neighboring cell measured by a UE - a serving cell reselection hysteresis, and Rs = an actual value of a RSRP of a serving cell measured by a UE + a serving cell reselection hysteresis.

For an inter-frequency or heterogeneous system cell with low-priority, when the Srxlev of the serving cell is lower than a corresponding threshold (Threshserving, low), and the Srxlev of the cell with low-priority exceeds a corresponding threshold (Threshx, low) for a period of time (Treselection), reselection can be performed.

However, requirements of the NB-IOT for the power consumption cannot be met by terminal measurement and reselection/handover solutions in the related art.

An effective solution has not been proposed yet for the above technical problem in the related art.

### SUMMARY

The disclosure provides a determination method, apparatus and system for starting cell measurement, and a storage medium, intended to at least solve the problem in the related art in which requirements of the NB-IOT for power consumption cannot be met by terminal measurement and reselection/handover solutions.

According to an aspect of the disclosure, a determination method for starting cell measurement is provided. The method includes that: after a terminal is registered with a network, the type of the terminal is judged according to identification information of the terminal, here, the type of the terminal includes a fixed terminal or a mobile terminal; and a trigger condition for starting the cell measurement is determined for the terminal according to the type.

In the above solution, the identification information may include at least one of an International Mobile Subscriber Identification Number (IMSI) or a Mobile Subscriber Identification Number (MSIN).

In the above solution, a trigger condition for starting the cell measurement determined for the terminal according to the type may include: responsive to that the type is a fixed terminal, the trigger condition includes at least one of: a network parameter of a cell where the terminal is located is smaller than or equal to a first predetermined threshold or a network parameter of a neighboring cell of the terminal is greater than or equal to a second predetermined threshold; or a difference between the network parameter of the cell where the terminal is located and the network parameter of the neighboring cell of the terminal is smaller than or equal to a third predetermined threshold; and responsive to that the type is a mobile terminal, the trigger condition is that an area where the terminal enters is an area where the value of a signal receiving parameter is smaller than a fourth predetermined threshold.

In the above solution, the method may further include that: responsive to that the type is a fixed terminal, before a trigger condition for starting the cell measurement is determined for the terminal according to the type, information of the signal receiving parameter actively reported by the terminal is received, and a network parameter of a cell where the terminal is located and/or a network parameter of a neighboring cell of the terminal are monitored.

In the above solution, the method may further include that: responsive to that the type is a mobile terminal, before a trigger condition for starting the cell measurement is determined for the terminal according to the type, it is estimated whether the terminal needs to start the cell measurement according to at least one of a position of the area where the terminal is located or the pre-stored value range of a signal receiving parameter of the area.

In the above solution, the method may further include that: before it is estimated whether the terminal needs to start the cell measurement according to at least one of the position of the area where the terminal is located or the pre-stored value range of the signal receiving parameter of the area, responsive to that the terminal enters a Radio Resource Control (RRC) connected state, a motion track of the terminal is monitored according to a tracking function of the terminal; and position information of the area where the terminal is located is determined according to the motion track.

In the above solution, the method may further include that: after a trigger condition for starting the cell measurement is determined for the terminal according to the type, responsive to that the trigger condition is met, an instruction is sent to the terminal for starting the cell measurement.

In the above solution, the network parameter may include: a transmitting power.

In the above solution, the signal receiving parameter may include at least one of an RSRP, a Reference Signal Received Quality (RSRQ), a Reference Signal Received Intensity (RSRI), or a Signal to Interference plus Noise Ratio (SINR).

According to an aspect of the disclosure, a determination method for starting cell measurement is provided. The method includes that: after a terminal is registered with a network, an instruction sent from a device at the network side and used for instructing the terminal to start the cell measurement is received, the instruction being an instruction triggered if the terminal meets a trigger condition for starting the cell measurement, the trigger condition for starting the cell measurement is determined by the device at the network side according to the type of the terminal, the type of the terminal being acquired by the device at the network side according to identification information of the terminal, and the type of the terminal includes a fixed terminal or a mobile terminal; and the cell measurement is started according to the instruction.

In the above solution, the identification information includes at least one of an IMSI or an MSIN.

In the above solution, the trigger condition for starting the cell measurement determined by the device at the network side according to the type of the terminal may include that: responsive to that the type is a fixed terminal, the trigger condition includes at least one of: a network parameter of a cell where the terminal is located is smaller than or equal to a first predetermined threshold, a network parameter of a neighboring cell of the terminal is greater than or equal to a second predetermined threshold; or a difference between the network parameter of the cell where the terminal is located and the network parameter of the neighboring cell of the terminal is smaller than or equal to a third predetermined threshold; and responsive to that the type is a mobile terminal, the trigger condition is that an area where the terminal enters is an area where a value of a signal receiving parameter is smaller than a fourth predetermined threshold.

Further, the network parameter may include a transmitting power.

According to an aspect of the disclosure, a determination apparatus for starting cell measurement is provided. The apparatus includes: a judging module, configured to judge, after a terminal is registered with a network, the type of the terminal according to identification information of the terminal, here, the type of the terminal includes a fixed terminal or a mobile terminal; and a determining module, configured to determine a trigger condition for starting the cell measurement for the terminal according to the type.

According to another aspect of the disclosure, a determination apparatus for starting cell measurement is provided. The apparatus includes: a receiving module, configured to receive, after a terminal is registered with a network, an instruction sent from a device at the network side and used for instructing the terminal to start the cell measurement, the instruction being an instruction triggered if the terminal meets a trigger condition for starting the cell measurement, the trigger condition for starting the cell measurement is determined by the device at the network side according to the type of the terminal, the type of the terminal being acquired by the device at the network side according to identification information of the terminal, and the type of the terminal includes a fixed terminal or a mobile terminal; and a starting module, configured to start the cell measurement according to the instruction.

According to another aspect of the disclosure, a determination system for starting cell measurement is provided. The system includes: a core network, a base station and a terminal, here, the terminal is located in a coverage area of the base station; the core network is configured to judge, after the terminal is registered with a network, the type of the terminal according to identification information of the terminal, and send the type to the base station; the base station is configured to receive the type sent from the core network, determine a trigger condition for starting the cell measurement for the terminal according to the type, and send an instruction for instructing the terminal to start the cell measurement to the terminal when determining that the terminal meets the trigger condition; and the terminal is configured to start, after receiving the instruction, the cell measurement.

The embodiment of the disclosure further provides a computer storage medium. The computer storage medium stores a computer executable instruction. The computer executable instruction is used to implement the above determination method for starting cell measurement according to the embodiment of the disclosure.

By means of the above operations, the type of a terminal is judged according to identification information of the terminal, and a trigger condition for starting cell measurement is determined according to the type of the terminal. That is, the different types of terminals correspond to different trigger conditions for starting the cell measurement, thus saving corresponding energy, better meeting requirements of the NB-IOT for power consumption, solving the problem in the related art in which requirements of the NB-IOT for power consumption cannot be met by terminal measurement and reselection/handover solutions, and saving energy while also improving the flexibility of the cell measurement.

### BRIEF DESCRIPTION OF DRAWINGS

The accompanying drawings described herein are used to provide a further understanding of the disclosure, and constitute a part of the present application, and the exemplary embodiments of the disclosure and the description thereof are used to explain the disclosure, but do not constitute improper limitations to the disclosure. In the drawings:
FIG. 1 is a first flowchart of a determination method for starting cell measurement according to an embodiment of the disclosure.
FIG. 2 is a second flowchart of a determination method for starting cell measurement according to an embodiment of the disclosure.
FIG. 3 is a structure schematic diagram of an IMSI according to an embodiment of the disclosure.
FIG. 4 is a schematic diagram of a process for starting cell measurement for a fixed terminal according to an embodiment of the disclosure.
FIG. 5 is a schematic diagram of a process for starting cell measurement for a mobile terminal according to an embodiment of the disclosure.
FIG. 6 is a structure block diagram of a determination apparatus for starting cell measurement according to an embodiment of the disclosure.
FIG. 7 is a structure block diagram of a determination apparatus for starting cell measurement according to an embodiment of the disclosure.
FIG. 8 is a structure block diagram of a determination system for starting cell measurement according to an embodiment of the disclosure.

### DETAILED DESCRIPTION

The disclosure will be described in detail below with reference to the drawings in conjunction with the embodiments. It is to be noted that in the case of no conflict, the features in the embodiments and the embodiments in the present application may be combined with each other.

It is to be noted that the specification and claims of the disclosure and the terms "first", "second" and the like in the drawings are used to distinguish similar objects, and do not need to describe a specific sequence or a precedence order.

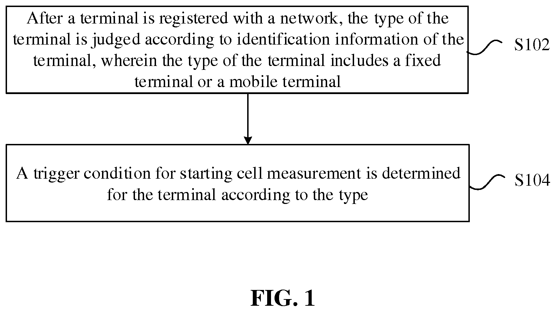

In the present embodiment, a determination method for starting cell measurement is provided. FIG. 1 is a first flowchart of a determination method for starting cell measurement according to an embodiment of the disclosure. As shown in FIG. 1, the flow includes the operations as follows.

At operation S102, after a terminal is registered with a network, the type of the terminal is judged according to identification information of the terminal, here, the type of the terminal is a fixed terminal or a mobile terminal.

At operation S104, a trigger condition for starting the cell measurement is determined for the terminal according to the type.

By means of the above operations, the type of a terminal is judged according to identification information of the terminal, and a trigger condition for starting cell measurement is determined according to the type of the terminal. That is, the different types of terminals correspond to different trigger conditions for starting the cell measurement, thus saving corresponding energy, better meeting requirements of the NB-IOT for power consumption, solving the problem in the related art in which requirements of the NB-IOT for power consumption cannot be met by terminal measurement and reselection/handover solutions, and saving energy while also improving the flexibility of the cell measurement.

It is to be noted that the above terminal may be a terminal under the NB-IOT, but is not limited thereto; the above execution body may be a device at a network side such as a base station or a core network device, but is not limited thereto.

It is to be noted that the identification information may be at least one of an IMSI or an MSIN. For the sake of explanation, the explanation is given by taking an MSIN as an example. The MSIN generally has 10 digits, and its structure is as follows: EF+M0M1M2M3+ABCD, where EF may be allocated by an operator; a corresponding relationship may exist between M0M1M2M3 and H0H1H2H3 in a Mobile Directory Number (MDN); ABCD, four digits, which may be randomly allocated. For the NB-IOT, the identification information may be set in the following manner, but it is not limited to this. The 6 digits of EF and ABCD may be used to set a specific identifier for the NB-IOT. For convenience of understanding, for example, EF is 00 means NB-IOT UE, D is 0 means a fixed UE, and the D is 1 means a mobile UE.

The trigger condition may also be understood as a condition that the terminal has to perform measurement, reselection or handover. Therefore, operation S104 may be at least one of: when the type is a fixed terminal, the trigger condition includes at least one of: a network parameter of a cell where the terminal is located is smaller than or equal to a first predetermined threshold; a network parameter of a neighboring cell of the terminal is greater than or equal to a second predetermined threshold; or a difference between the network parameter of the cell where the terminal is located and the network parameter of the neighboring cell of the terminal is smaller than or equal to a third predetermined threshold; and when the type is a mobile terminal, the trigger condition is that an area where the terminal enters is an area where a received signal is smaller than a fourth predetermined threshold.

It is to be noted that the area where the value of the signal receiving parameter is smaller than the fourth predetermined threshold is an area where an access signal is poor.

It is to be noted that the first predetermined threshold, the second predetermined threshold, the third predetermined threshold and the fourth predetermined threshold may be preset according to actual situations, but are not limited thereto.

A terminal will start the cell measurement when the terminal has to perform measurement, reselection or handover. If the measurement, reselection or handover is not required to be performed, the terminal does not start the cell measurement. Compared with the related art in which the terminal continuously performs the cell measurement, energy is saved to a greater extent. For the NB-IOT, it can better meet the requirements of the NB-IOT for power consumption.

In an embodiment of the disclosure, when the type is a fixed terminal, before operation S104, the method may further include that: information of a signal receiving parameter actively reported by the terminal is received, and a network parameter of a cell where the terminal is located and/or a network parameter of a neighboring cell of the terminal are monitored.

It is to be noted that the signal receiving parameter may include, but is not limited to, at least one of an RSRP, an RSRQ, an RSRI, or an SINR. The network parameter may be a transmitting power, but is not limited thereto.

In an embodiment of the disclosure, when the type is a mobile terminal, before operation S104, the method may further include that: it is estimated whether the terminal needs to start the cell measurement according to a position of the area where the terminal is located and/or a pre-stored value range of the signal receiving parameter of the area.

It is to be noted that the pre-stored value range of the signal receiving parameter of the area may be obtained by the following manners. In the initial stage of deploying a base station, a signal receiving situation of each area in the cell (e.g., RSRP, RSRQ, SINR, etc.) can be obtained by for example placing multiple terminals in some typical areas of each cell to perform measurement, the base station estimates the change range of the signal receiving parameter such as RSRP and RSRQ of the terminal in each area according to the signal receiving situation of each area in the cell (e.g., RSRP, RSRQ, SINR, etc.), and then the channel situation and the corresponding parameters of the area are stored in the base station. Which areas have strong signal reception and which areas have weak signal reception can be obtained by the sampling performed by multiple terminals, and the information is stored in the base station.

For example, how to estimate whether the terminal needs to start the cell measurement will be described according to the position of an area where the terminal is located and the pre-stored value range of a signal receiving parameter of the area. First, according to the position of the area where the terminal is located, it is predicted whether the area is a pre-stored area where the received signal is weak. If the area is a pre-stored area where the signal reception is weak, the value of the signal receiving parameter of the terminal in the area is compared with the pre-stored value range. If the signal receiving parameter of the terminal in the area is within the pre-stored value range of the signal receiving parameter of the area, it can be concluded that the terminal needs to start the cell measurement. That is, the terminal does enter an area where the signal reception is weak (i.e., the area where the terminal is located is determined to be the area where the signal reception is weak). This can avoid the problem that a terminal consumes power by unnecessary measurement in some areas where the signal reception is good. The above estimation process is not limited to this.

In an embodiment of the disclosure, when the terminal is a mobile terminal, the terminal generally has a tracking function and the tracking function can be used to position the terminal. Therefore, the method may further include that: before it is estimated whether the terminal needs to start the cell measurement according to the position of an area where the terminal is located and/or the pre-stored value range of the signal receiving parameter of the area, when the terminal enters a RRC connected state, a motion track of the terminal is monitored according to a positioning function of the terminal; and position information of an area where the terminal is located is determined according to the motion track.

In an embodiment of the disclosure, after operation S104, the method may further include that: when the trigger condition is met, an instruction is sent to the terminal for starting the cell measurement. At the same time as or after the instruction is sent, a timer may be started. When the terminal completes the measurement and a measurement result meets a handover condition, the terminal is notified to perform the handover. If the handover condition is not met, the terminal is notified to stop the measurement if the timer expires.

It is to be noted that the instruction may be sent by paging information or dedicated signaling, but is not limited thereto.

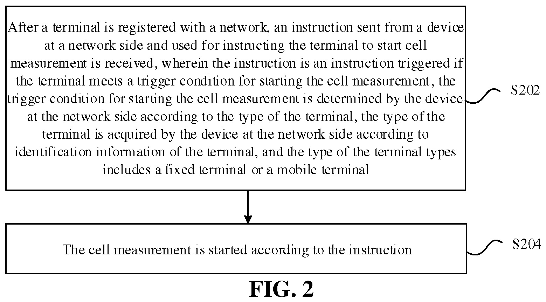

In the present embodiment, a determination method for starting cell measurement is provided. FIG. 2 is a second flowchart of a determination method for starting cell measurement according to an embodiment of the disclosure. As shown in FIG. 2, the flow includes the operations as follows.

At operation S202, after a terminal is registered with a network, an instruction sent from a device at a network side and used for instructing the terminal to start the cell measurement is received, here, the instruction is an instruction triggered if the terminal meets a trigger condition for starting the cell measurement, the trigger condition for starting the cell measurement is determined by the device at the network side according to the type of the terminal, the type of the terminal is acquired by the device at the network side according to identification information of the terminal, and the type of the terminal includes a fixed terminal or a mobile terminal.

At operation S204, the cell measurement is started according to the instruction.

By means of the above operations, the type of a terminal is judged according to identification information of the terminal, and a trigger condition for starting cell measurement is determined according to the type of the terminal. That is, the different types of terminals correspond to different trigger conditions for starting the cell measurement, thus saving corresponding energy, better meeting requirements of the NB-IOT for power consumption, solving the problem in the related art in which requirements of the NB-IOT for power consumption cannot be met by terminal measurement and reselection/handover solutions, and saving energy while also improving the flexibility of the cell measurement.

It is to be noted that the above terminal may be a terminal under the NB-IOT, but is not limited thereto; the above execution body may be a terminal.

It is to be noted that the identification information may be at least one of an IMSI or an MSIN. For the sake of explanation, the explanation is given by taking an MSIN as an example. The MSIN generally has 10 digits, and its structure is as follows: EF+M0M1M2M3+ABCD, where EF may be allocated by an operator; a corresponding relationship may exist between M0M1M2M3 and H0H1H2H3 in an MDN; ABCD, four digits, which may be randomly allocated. For the NB-IOT, the identification information may be set in the following manner, but it is not limited to this. The 6 digits of EF and ABCD may be used to set a specific identifier for the NB-IOT. For convenience of understanding, for example, EF is 00 means NB-IOT UE, D is 0 means a fixed UE, and the D is 1 means a mobile UE.

It is to be noted that the trigger condition for starting the cell measurement by the device at the network side according to the type of the terminal may include that: when the type is a fixed terminal, the trigger condition is that a network parameter of a cell where the terminal is located is smaller than or equal to a first predetermined threshold or a network parameter of a neighboring cell of the terminal is greater than or equal to a second predetermined threshold; and when the type is a mobile terminal, the trigger condition is that an area where the terminal enters is an area where the value of a signal receiving parameter is smaller than a third predetermined threshold.

It is to be further noted that the area where the value of the signal receiving parameter is smaller than the third predetermined threshold is an area where an access signal is poor. The network parameter may include a transmitting power.

The terminal will start the cell measurement when the terminal has to perform measurement, reselection or handover. If the measurement, reselection or handover is not required to be performed, the terminal does not start the cell measurement. Compared with the related art in which the terminal continuously performs the cell measurement, energy is saved to a greater extent. For the NB-IOT, it can better meet the requirements of the NB-IOT for power consumption.

It is to be noted that in other descriptions or operations, reference may be made to the corresponding explanation in the method embodiment shown in FIG. 1, and details are not described herein again.

In order to better understand the disclosure, the disclosure will be further explained in conjunction with the embodiments.

The disclosure provides an optional determination method for starting cell measurement. The method includes that: when a terminal in an NB-IOT is registered with a network, a core network may determine whether the terminal is a fixed terminal or a mobile terminal according to identification information of UE such as an IMSI in a SIM card, and send the information to a base station where the terminal is located; and the base station performs measurement reselection/handover policy for the terminal according to the information.

For a fixed UE such as a smart water meter, the geographical location where the smart water meter is located is fixed, the communication scenario is relatively simple, and the measurement and reselection/handover of networks are not required frequently. When the terminal is started and registered with the network, the core network determines whether the registered terminal is a fixed terminal or a mobile terminal according to its IMSI. Then, the core network sends the information to the base station where the terminal is located, and the base station determines different measurement and reselection/handover solutions according to the property of the terminal. When the network situation changes (for example, the load of the cell where the terminal is located and the load of a neighboring cell are excessive (considering when handover is performed), the power of the cell where the terminal is located and the power of the neighboring cell change (considering when reselection/handover is performed), new site is deployed, etc.), a network side may perform monitoring and instruct a UE to perform passive cell measurement and reselection/handover, instead of performing active measurement and reselection/handover by the UE.

A mobile terminal generally has a tracking function, such as a smart travel companion with NB-IOT (a device with tracking function for smart luggage) or a smart tracking on Bicycle (a device for tracking on bicycle). This function can be used (this function can only be used when the UE is in an RRC connected state), and when the device starts, a network state diagram of a cell where the device is located and a neighboring cell is downloaded, so the network instructs the UE to trigger and start the measurement when moving to some areas. If the UE moves to the neighboring cell, the above operations are repeatedly performed at the time of the handover. This avoids the UE from consuming power by making unnecessary measurements and reporting when the network is in good condition.

It is to be noted that the IMSI in the existing communication network is defined as follows.

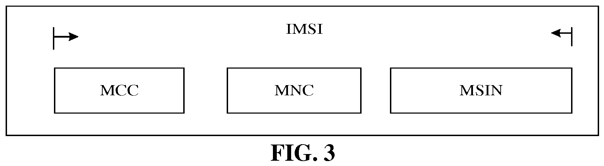

IMSI is a 15-digit decimal number. FIG. 3 is a structure schematic diagram of an IMSI according to an embodiment of the disclosure. As shown in FIG. 3, the IMSI is composed of MCC+MNC+MSIN.

Mobile Country Code (MCC): MCC resources are uniformly distributed and managed by the International Telecommunication Union (ITU) worldwide for uniquely identifying countries to which mobile subscribers belong, MCC has 3 digits, and China is 460.

Mobile Network Code (MNC): used to identify a mobile communication network to which a mobile subscriber belongs, including 2 to 3 digits.

In the same country, if there are multiple Public Land Mobile Networks (PLMN, generally one operator in a certain country corresponds to one PLMN), multiple PLMNs can be distinguished by MNC, that is, each PLMN must be allocated with a unique MNC. The China Mobile system uses 00, 02, 04, 07, the China Unicom GSM system uses 01, 06, the China Telecom CDMA system uses 03, 05, the Telecom 4G uses 11, and the China Railcom system uses 20.

MSIN: used to identify mobile subscribers in a mobile communication network. There are 10 digits in total, and the structure is as follows.
EF+M0M1M2M3+ABCD

The EF is allocated by an operator; M0M1M2M3 and H0H1H2H3 in an MDN may have a corresponding relationship; ABCD, four digits, randomly allocated.

For the NB-IOT, for example, EF may be allocated by an operator. ABCD are randomly allocated. Then these 6 digits may be used to set a specific identifier for the NB-IOT. For convenience of description, for example, it is assumed that EF is 00 means NB-IOT UE, D is 0 means a fixed UE, and the D is 1 means a mobile UE.

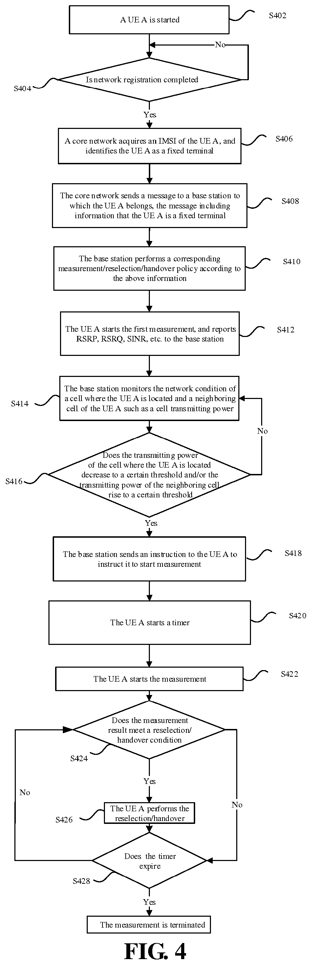

Specifically, FIG. 4 is a schematic diagram of a process for starting cell measurement for a fixed terminal according to an embodiment of the disclosure. As shown in FIG. 4, the process may include the operations as follows.

At operation S402, a fixed UE A starts a device and accesses to a certain cell.

At operation S404, it is judged whether the network registration is completed, and if so, operation S406 is performed.

At operation S406, a core network acquires an IMSI code of the UE A, and identifies the UE A as a fixed terminal according to the IMSI code of the UE A.

At operation S408, the core network sends a message to a base station to which the UE A belongs, the message including information (fixed or mobile) in the base station that the UE A is a fixed terminal.

At operation S410, the base station performs a corresponding measurement/reselection/handover policy according to the above information.

At operation S412, the UE A starts the first measurement, and reports the channel quality, signal reception status (such as indicators of RSRP, RSRI, RSRQ, SINR, etc. which represent the channel status) to the base station.

At operation S414, the base station monitors the network condition of a cell where the UE A is located and a neighboring cell (such as a condition of transmitting power of the cell).

At operation S416, the base station may perform estimation according to the network condition. When it is estimated that the transmitting power of the cell decreases to a certain threshold and/or the transmitting power of the neighboring cell rises to a certain threshold, that is, when the UE A will have to perform reselection (idle state) or handover (connected state), operation S418 is performed, otherwise, operation S416 is performed.

At operation S418, the base station sends an instruction (for UE in an idle state, the instruction is included in a paging message, and UE in a connected state, the instruction is sent through a dedicated signaling) to the UE A to instruct it to start measurement.

At operation S420, a Timer A is started, and the time is set to be T1 (sufficient for the UE A to complete the measurement, reselection/handover).

At operation S422, the UE A starts the measurement.

At operation S424, it is judged whether the measurement result meets the reselection/handover condition, if yes, operation S426 is performed; otherwise, operation S428 is performed.

At operation S426, the UE A performs the reselection/handover.

At operation S428, when the timer expires, the measurement is terminated.

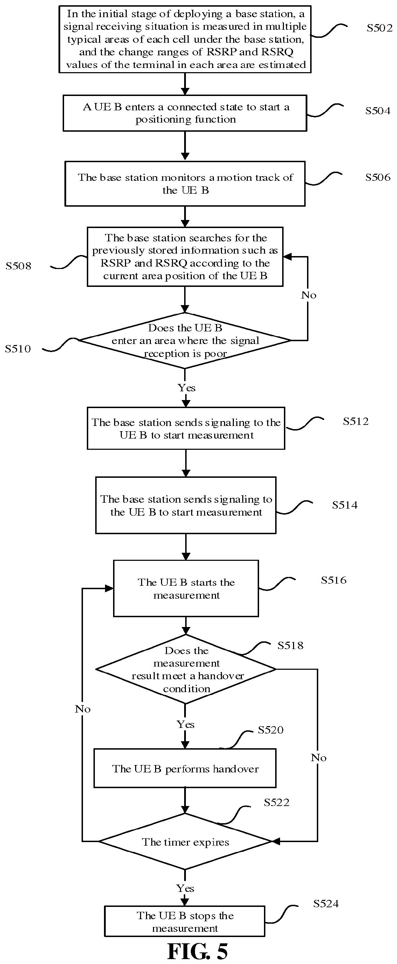

FIG. 5 is a schematic diagram of a process for starting cell measurement for a mobile terminal according to an embodiment of the disclosure. As shown in FIG. 5, the starting flow includes the operations as follows.

At operation S502, in the initial stage of deploying a base station, a signal receiving situation of each area in the cell (e.g., RSRP, RSRQ, SINR, etc.) can be obtained by for example placing multiple terminals in some typical areas of each cell to perform measurement, the base station can estimate change ranges of signal receiving parameters such as RSRP and RSRQ of the terminal in each area according to a signal receiving situation of each area in the cell (e.g., RSRP, RSRQ, SINR, etc.), and then the channel situation and the corresponding parameters of the area are stored in the base station.

At operation S504, a UE B enters a connected state to start a positioning function.

At operation S506, the base station monitors a motion track of the UE B (which may be positioned by a GPS).

At operation S508, the base station estimates whether the UE B needs to start measurement, handover and the like by searching for the previously stored information such as RSRP and RSRQ according to the position of the area where the UE B is located , that is, the base station estimates whether the UE B needs to start the measurement, handover and the like according to the position of the area where the UE B is located and the previously stored value ranges of parameters such as RSRP, RSRQ and the like, thereby avoiding the process of power consumption of the UE B performing unnecessary measurement in some areas with good signal reception.

At operation S510, it is judged whether the UE B enters an area where the signal reception is poor; when the UE B enters the area where the signal reception is poor, the base station side estimates that the UE B has to perform the handover, operation S512 is performed, otherwise, operation S514 is performed.

At operation S512, the base station sends signaling to the UE B to start measurement.

At operation S514, the UE B starts a Timer B, and sets the time to be T2 (sufficient for the UE A to complete the measurement and handover).

At operation S516, the UE starts measurement.

At operation S518, it is judged whether the measurement result meets the handover condition, if yes, operation S520 is performed; otherwise, operation S522 is performed.

At operation S520, the UE B performs handover.

At operation S522, it is judged whether the timer expires; if yes, operation S524 is performed; otherwise, operation S516 is performed.

At operation S524, the UE B stops the measurement.

In order to better understand the above preferred embodiments, the following description will be made in conjunction with specific scenarios.

First scenario: An NB-IOT Forest Monitor Terminal (F) is deployed somewhere in a forest to monitor natural disasters such as fires in forests or to determine behavior such as illegal logging. In order to enhance the LTE signal coverage of the forest, a small base station is added near a cell where F is located, and the signal receiving condition in the new-added neighboring cell will be better than that of the cell to which the F originally belongs, and F needs to perform reselection. The specific process is as follows. F is started and registered with a network. A core network judges that the terminal is a fixed terminal in the NB-IOT according to the IMSI of the terminal. The core network sends a message including the terminal attribute (either a fixed state or a mobile state) to a base station to which the terminal belongs. The base station performs a measurement, reselection/handover algorithm of the fixed terminal in the NB-IOT according to the above attributes. F starts measurement and feeds back channel measurement information (RSRP, RSRQ, SINR, etc.) to the base station, and then releases an RRC connection to enter an idle state. The base station monitors the network conditions of the cell where the terminal F is located and the neighboring cell (e.g., load (considered when the handover is performed), transmitting power status, etc.). The base station detects that a new station is added to the cell where the terminal F is located, and estimates RSRP and RSRQ values of the cell where the terminal F is located and the neighboring cell of the terminal F according to the situation of the signal received by F previously. If the estimated RSRP and RSRQ values of the neighboring cell are better than corresponding thresholds, the base station sends an instruction for staring measurement to the terminal F. The terminal F starts measurement and starts a Timer A, and sets the time to be T1 (sufficient for the terminal F to complete the measurement, reselection/handover), and if the measurement result meets the condition of performing the reselection/handover, the terminal F performs the reselection/handover. If the measurement result does not meet the condition of performing the reselection/handover, the terminal F stops the measurement when the Timer A expires.

Second scenario: An NB-IOT mobile terminal bicycle recorder G is placed on a bicycle and used for tracking and recording the bicycle. After a terminal G is started, the bicycle starts to move, and when it is slowly driven to a certain cell, handover is needed to be performed. The specific process is as follows. in the initial stage of deploying a base station, the base station masters a channel situation of each area in the cell (e.g., RSRP, RSRQ, SINR, etc.) according to the measurement result obtained by NB-IOT terminals placed in some typical areas of each cell, and the channel situation and the corresponding area parameters are stored in the base station. The terminal G is started and registered with a network. A core network judges that the terminal G is a mobile terminal in the NB-IOT according to an IMSI of the terminal G. The core network sends a message including the terminal attribute (either a fixed state or a mobile state) to a base station to which the terminal belongs. The base station performs a measurement, reselection/handover algorithm of the mobile terminal in the NB-IOT according to the above attributes. The base station judges whether the terminal G needs to start the measurement, handover, etc. according to the monitored position of the bicycle and the previously stored signal receiving situation of each area in the cell. The bicycle slowly travels from a cell A to a cell B. When the base station determines that the bicycle has reached an area where the signal reception is not good, the terminal G is triggered to start the measurement, and a Timer B is started and the time is set to be T2 (sufficient for the terminal G to complete the measurement and handover), and if the measurement result meets the handover condition, the handover is performed. If the measurement result does not meet the reselection/handover condition, the terminal G stops the measurement when the Timer B expires.

Through the description of the above implementation manners, those skilled in the art can clearly understand that the method according to the above embodiment may be implemented by means of software plus a necessary general hardware platform, and of course, may also be implemented through hardware, but in many cases, the former is a better implementation manner. Based on such understanding, the technical solution of the disclosure, which is essential or contributes to the conventional art, may be embodied in the form of a software product stored in a storage medium (such as a ROM/RAM, a magnetic disk and an optical disc), including a number of instructions for causing a terminal device (which may be a mobile phone, a computer, a server, or a network device, etc.) to perform the methods described in various embodiments of the disclosure.

In the present embodiment, a determination apparatus for starting cell measurement is also provided. The apparatus is used to implement the above embodiments and preferred implementation manners, and those have not been described will not be elaborated. As used below, the term "module" may implement a combination of software and/or hardware of a predetermined function. Although the apparatus described in the following embodiments is preferably implemented in software, hardware, or a combination of software and hardware, is also possible and contemplated.

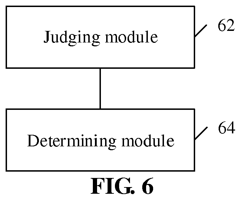

FIG. 6 is a structure block diagram of a determination apparatus for starting cell measurement according to an embodiment of the disclosure. As shown in FIG. 6, the apparatus includes a judging module 62 and a determining module 64.

The judging module 62 is configured to judge, after a terminal is registered with a network, the type of the terminal according to identification information of the terminal, wherein the type of the terminal includes a fixed terminal or a mobile terminal.

The determining module 64 is connected to the judging module 62 and is configured to determine, for the terminal, a trigger condition for starting the cell measurement according to the type.

By means of the above apparatus, the type of a terminal is judged according to identification information of the terminal, and a trigger condition for starting cell measurement is determined according to the type of the terminal. That is, the different types of terminals correspond to different trigger conditions for starting the cell measurement, thus saving corresponding energy, better meeting requirements of The NB-IOT for power consumption, solving the problem in the related art in which requirements of The NB-IOT for power consumption cannot be met by terminal measurement and reselection/handover solutions, and saving energy while also improving the flexibility of cell measurement.

It is to be noted that the above terminal may be a terminal under the NB-IOT, but is not limited thereto. The above apparatus may be located on a device at the network side such as a base station or a core network device, but is not limited thereto.

It is to be noted that the identification information may be at least one of an IMSI or an MSIN. For the sake of explanation, the explanation is given by taking an MSIN as an example. The MSIN generally has 10 digits, and its structure is as follows: EF+M0M1M2M3+ABCD, where EF may be allocated by an operator; a corresponding relationship may exist between M0M1M2M3 and H0H1H2H3 in an MDN; ABCD, four digits, which may be randomly allocated. For the NB-IOT, the identification information may be set in the following manner, but it is not limited to this. The 6 digits of EF and ABCD may be used to set a specific identifier for the NB-IOT. For convenience of understanding, for example, EF is 00 means NB-IOT UE, where D is 0 means a fixed UE, and the D is 1 means a mobile UE.

The trigger condition may also be understood as a condition that the terminal has to perform measurement, reselection or handover. Therefore, the corresponding relationship between the trigger condition and the terminal type may be presented as that: when the type is a fixed terminal, the trigger condition includes at least one of : a network parameter of a cell where the terminal is located is smaller than or equal to a first predetermined threshold, a network parameter of a neighboring cell of the terminal is greater than or equal to a second predetermined threshold; or a difference between the network parameter of the cell where the terminal is located and the network parameter of the neighboring cell of the terminal is smaller than or equal to a third predetermined threshold; and when the type is a mobile terminal, the trigger condition is that an area where the terminal enters is an area where a received signal is smaller than a fourth predetermined threshold.

It is to be noted that the area where the value of the signal receiving parameter is smaller than the fourth predetermined threshold is an area where an access signal is poor. It is to be noted that the first predetermined threshold, the second predetermined threshold, the third predetermined threshold and the fourth predetermined threshold may be preset according to actual situations, but are not limited thereto.

The terminal will start the cell measurement when the terminal has to perform the measurement, reselection or handover. If the measurement, reselection or handover is not required to be performed, the terminal does not start the cell measurement. Compared with the related art in which the terminal continuously performs the cell measurement, energy is saved to a greater extent. For the NB-IOT, it can better meet the requirements of the NB-IOT for power consumption.

In an embodiment of the disclosure, the apparatus may include: a receiving module, connected to the determining module 64, and configured to receive, when the type is a fixed terminal, information of a signal receiving parameter actively reported by the terminal, and monitor a network parameter of a cell where the terminal is located and/or a network parameter of a neighboring cell of the terminal.

It is to be noted that the signal receiving parameter may include, but is not limited to, at least one of an RSRP, an RSRQ, an RSRI, or an SINR. The network parameter may be a transmitting power, but is not limited thereto.

In an embodiment of the disclosure, the apparatus may further include: an estimating module, configured to estimate, when the type is a mobile terminal, whether the terminal needs to start the cell measurement according to the position of an area where the terminal is currently located and/or the value range of a signal receiving parameter of a pre-stored area.

It is to be noted that the value range of the signal receiving parameter of the pre-stored area may be obtained by the following manners. In the initial stage of deploying a base station, a signal receiving situation of each area in the cell (e.g., RSRP, RSRQ, SINR, etc.) can be obtained by for example placing multiple terminals in some typical areas of each cell to perform measurement, the base station estimates the change range of the signal receiving parameter such as RSRP and RSRQ of the terminal in each area according to the signal receiving situation of each area in the cell (e.g., RSRP, RSRQ, SINR, etc.), and then the channel situation and the corresponding parameters of the area are stored in the base station. Which areas have strong signal reception and which areas have weak signal reception can be obtained by the sampling performed by multiple terminals, and the information is stored in the base station.

For example, it is described how the estimating module estimates whether the terminal needs to start the cell measurement according to the position of an area where the terminal is located and the pre-stored value range of a signal receiving parameter of the area. First, according to the position of the area where the terminal is located, it is predicted whether the area is a pre-stored area where signal reception is weak. If the signal reception is weak, the value of the signal receiving parameter of the terminal in the area is compared with the pre-stored value range. If the signal receiving parameter of the terminal in the area is within the pre-stored value range of the signal receiving parameter of the area, so it can be concluded that the terminal needs to start the cell measurement, that is, the terminal does enter an area where the signal reception is weak (i.e., the area where the terminal is located is determined to be the area where the signal reception is weak). This can avoid the problem that a terminal consumes power by unnecessary measurement in some areas where signal reception is good. The above estimation process is not limited to this.

In an embodiment of the disclosure, when the terminal is a mobile terminal, the terminal generally has a tracking function and the tracking function can be used to position the terminal. Therefore, the apparatus may further include: a positioning module, configured to monitor, when the terminal enters a RRC connected state, a motion track of the terminal according to a positioning function of the terminal, and determine position information of an area where the terminal is located according to the motion track.

In an embodiment of the disclosure, the apparatus may further include a sending module, connected to the determining module 64, and configured to send, when the trigger condition is met, an instruction for starting the cell measurement to the terminal. It is to be noted that the apparatus may further include a timer, configured to determine measurement stopping time of the terminal when the measurement result does not meet the handover condition at the same time as or after the instruction is sent.

It is to be noted that the instruction may be sent from paging information or dedicated signaling, but is not limited thereto.

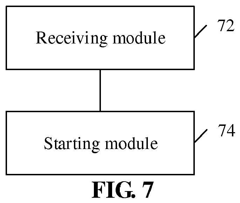

In the present embodiment, a determination apparatus for starting cell measurement is also provided. FIG. 7 is a structure block diagram of a determination apparatus for starting cell measurement according to an embodiment of the disclosure. As shown in FIG. 7, the apparatus may include a receiving module 72 and a starting module 74.

The receiving module 72 is configured to receive, after a terminal is registered with a network, an instruction sent from a device at the network side and used for instructing the terminal to start the cell measurement, here, the instruction is an instruction triggered if the terminal meets a trigger condition for starting the cell measurement, the trigger condition for starting the cell measurement is determined by the device at the network side according to the type of the terminal, the type of the terminal is acquired by the device at the network side according to identification information of the terminal, and the type of the terminal include: a fixed terminal or a mobile terminal.

The starting module 74 is connected to the receiving module 72 and is configured to start the cell measurement according to the instruction.

By means of the above apparatus, the type of a terminal is judged according to identification information of the terminal, and a trigger condition for starting cell measurement is determined according to the type of the terminal. That is, the different types of terminals correspond to different trigger conditions for starting the cell measurement, thus saving corresponding energy, better meeting requirements of the NB-IOT for power consumption, solving the problem in the related art in which requirements of the NB-IOT for power consumption cannot be met by terminal measurement and reselection/handover solutions, and saving energy while also improving the flexibility of the cell measurement.

It is to be noted that the above terminal may be a terminal under the NB-IOT, but is not limited thereto; the above apparatus may be located in a terminal, but is not limited thereto.

It is to be noted that, for the explanation of the apparatus, reference may be made to the related description of the above corresponding method embodiments, and details are not described herein again.

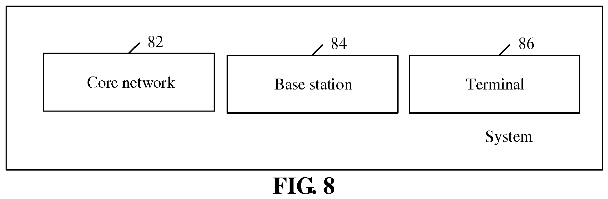

In the present embodiment, a determination system for starting cell measurement is also provided. FIG. 8 is a structure block diagram of a determination system for starting cell measurement according to an embodiment of the disclosure. As shown in FIG. 8, the apparatus may include: a core network 82, a base station 84 and a terminal 86, wherein the terminal 86 is located in a coverage area of the base station 84.

The core network 82 is configured to judge, after the terminal 86 is registered with a network, the type of the terminal 86 according to identification information of the terminal 86, and send the type to the base station 84.

The base station 84 is configured to receive the type sent from the core network 82, determine a trigger condition for starting the cell measurement for the terminal 86 according to the type, and send an instruction for instructing the terminal to start the cell measurement to the terminal 86 when determining that the terminal 86 meets the trigger condition.

The terminal 86 is configured to start, after receiving the instruction, the cell measurement.

By means of the above system, the type of a terminal is judged according to identification information of the terminal, and a trigger condition for starting cell measurement is determined according to the type of the terminal. That is, the different types of terminals correspond to different trigger conditions for starting the cell measurement, thus saving corresponding energy, better meeting requirements of the NB-IOT for power consumption, solving the problem in the related art in which requirements of the NB-IOT for power consumption cannot be met by terminal measurement and reselection/handover solutions, and saving energy while also improving the flexibility of the cell measurement.

For the explanation of the base station 84, reference may be made to the explanation of the apparatus shown in FIG. 6, and details are not described herein again. For the description of the terminal 86, reference may be made to the description of the apparatus shown in FIG. 7, and details are not described herein again.

It is to be noted that each of the above modules may be implemented by software or hardware. For the latter, the above may be implemented by, but not limited to, the following manners that the above modules are all located in the same processor; or, the above modules are located in multiple processors respectively.

The judging module, the determining module, the estimating module, the sending module, the positioning module, and the starting module in the determination apparatus for starting cell measurement in the embodiment of the disclosure may be implemented by a processor, and may also be implemented by a specific logic circuit. The processor may be a Central Processing Unit (CPU), a Micro Processing Unit (MPU), a Digital Signal Processor (DSP), or a Field Programmable Gate Array (FPGA).

In the embodiment of the disclosure, if the determination method for starting cell measurement is implemented in the form of a software function module, and is sold or used as a separate product, it may also be stored in a computer readable storage medium. Based on such understanding, the technical solution of the disclosure, which is essential or contributes to the conventional art, may be embodied in the form of a software product stored in a storage medium, including a number of instructions for causing a terminal device (which may be a personal computer, a server, or a network device, etc.) to perform all or part of the methods described in various embodiments of the disclosure. The foregoing storage medium includes various media that can store program codes, such as a USB flash drive, a mobile hard disk, a Read Only Memory (ROM), a magnetic disk, or an optical disk. Thus, the embodiment of the disclosure is not limited to the combination of any specific hardware and software.

Correspondingly, the embodiment of the disclosure further provides a computer storage medium. The computer storage medium stores a computer program. The computer program is used to perform the above determination method for starting cell measurement according to the embodiment of the disclosure.

In the present embodiment, the storage medium may be configured to store a program code for performing the operations as follows.

At S1, after a terminal is registered with a network, the type of the terminal is judged according to identification information of the terminal, wherein the type of the terminal includes a fixed terminal or a mobile terminal.

At S2, a trigger condition for starting cell measurement is determined for the terminal according to the type.

In a specific implementation manner, in the present embodiment, the above storage medium may include, but not limited to, various media that can store program codes such as a U disk, a ROM, a Random Access Memory (RAM), a mobile hard disk, a magnetic disk or an optical disk.

In a specific implementation manner, a specific example in the present embodiment may refer to the examples described in the above embodiments and alternative implementation manners, and details are not described herein in the present embodiment.

It is apparent that a person skilled in the art shall understand that all of the above-mentioned modules or operations in the disclosure may be implemented by using a general calculation device, may be centralized on a single calculation device or may be distributed on a network composed of multiple calculation devices. Optionally, they may be implemented by using executable program codes of the calculation devices. Thus, they may be stored in a storage device and executed by the calculation devices, the shown or described operations may be executed in a sequence different from this sequence under certain conditions, or they are manufactured into each integrated circuit module respectively, or multiple modules or operations therein are manufactured into a single integrated circuit module. Thus, the disclosure is not limited to the combination of any specific hardware and software.

The above is only the preferred embodiments of the disclosure, not intended to limit the disclosure. As will occur to those skilled in the art, the disclosure is susceptible to various modifications and changes. Any modifications, equivalent replacements, improvements and the like made within the spirit and principle of the disclosure shall fall within the scope of protection of the disclosure.

## Claims

1. A determination method for starting cell measurement, comprising:
after a terminal is registered with a network, judging the type of the terminal according to identification information of the terminal, wherein the type of the terminal comprises: a fixed terminal or a mobile terminal; and
determining, for the terminal, a trigger condition for starting the cell measurement according to the type.

2. The method of claim 1, wherein the identification information comprises at least one of an International Mobile Subscriber Identification Number (IMSI) or a Mobile Subscriber Identification Number (MSIN).

3. The method of claim 1, wherein the trigger condition for starting the cell measurement determined for the terminal according to the type comprises:
responsive to that the type is a fixed terminal, the trigger condition comprises at least one of: a network parameter of a cell where the terminal is located is smaller than or equal to a first predetermined threshold, a network parameter of a neighboring cell of the terminal is greater than or equal to a second predetermined threshold; or a difference between the network parameter of the cell where the terminal is located and the network parameter of the neighboring cell of the terminal is smaller than or equal to a third predetermined threshold; and
responsive to that the type is a mobile terminal, the trigger condition is that an area where the terminal enters is an area where a value of a signal receiving parameter is smaller than a fourth predetermined threshold.

4. The method of claim 3, further comprising: responsive to that the type is a fixed terminal, before determining, for the terminal, the trigger condition for starting the cell measurement according to the type,
receiving information of the signal receiving parameter actively reported by the terminal, and monitoring at least one of the network parameter of the cell where the terminal is located or the network parameter of the neighboring cell of the terminal.

5. The method of claim 3, further comprising: responsive to that the type is a mobile terminal, before determining, for the terminal, the trigger condition for starting the cell measurement according to the type,
estimating whether the terminal needs to start the cell measurement according to at least one of a position of the area where the terminal is located or a pre-stored value range of the signal receiving parameter of the area.

6. The method of claim 5, further comprising: before estimating whether the terminal needs to start the cell measurement according to at least one of the position of the area where the terminal is located or the pre-stored value range of the signal receiving parameter of the area,
responsive to that the terminal enters a Radio Resource Control (RRC) connected state, monitoring a motion track of the terminal according to a tracking function of the terminal; and
determining position information of the area where the terminal is located according to the motion track.

7. The method of claim 1, further comprising: after determining, for the terminal, the trigger condition for starting the cell measurement according to the type,
responsive to that the trigger condition is met, sending an instruction to the terminal for starting the cell measurement.

8. The method of claim 4, wherein the network parameter comprises: a transmitting power.

9. The method of claim 4, wherein the signal receiving parameter comprises at least one of a Reference Signal Received Power (RSRP), a Reference Signal Received Quality (RSRQ), a Reference Signal Received Intensity (RSRI), or a Signal to Interference plus Noise Ratio (SINR).

10. A determination method for starting cell measurement, comprising:
after a terminal is registered with a network, receiving an instruction sent from a device at a network side and used for instructing the terminal to start the cell measurement, wherein the instruction is an instruction triggered if the terminal meets a trigger condition for starting the cell measurement, the trigger condition for starting the cell measurement is determined by the device at the network side according to the type of the terminal, the type of the terminal is acquired by the device at the network side according to identification information of the terminal, and the type of the terminal comprises a fixed terminal or a mobile terminal; and
starting the cell measurement according to the instruction.

11. The method of claim 10, wherein the identification information comprises at least one of an International Mobile Subscriber Identification Number (IMSI) or a Mobile Subscriber Identification Number (MSIN).

12. The method of claim 10, wherein the trigger condition for starting the cell measurement determined by the device at the network side according to the type of the terminal comprises:
responsive to that the type is a fixed terminal, the trigger condition comprises at least one of: a network parameter of a cell where the terminal is located is smaller than or equal to a first predetermined threshold, a network parameter of a neighboring cell of the terminal is greater than or equal to a second predetermined threshold; or a difference between the network parameter of the cell where the terminal is located and the network parameter of the neighboring cell of the terminal is smaller than or equal to a third predetermined threshold; and
responsive to that the type is a mobile terminal, the trigger condition is that an area where the terminal enters is an area where a value of a signal receiving parameter is smaller than a fourth predetermined threshold.

13. The method of claim 12, wherein the network parameter comprises: a transmitting power.

14. A determination apparatus for starting cell measurement, comprising:
a judging module, configured to judge, after a terminal is registered with a network, the type of the terminal according to identification information of the terminal, wherein the type of the terminal comprises a fixed terminal or a mobile terminal; and
a determining module, configured to determine, for the terminal, a trigger condition for starting the cell measurement according to the type.

15. A determination apparatus for starting cell measurement, comprising:
a receiving module, configured to receive, after a terminal is registered with a network, an instruction sent from a device at the network side and used for instructing the terminal to start the cell measurement, wherein the instruction is an instruction triggered if the terminal meets a trigger condition for starting the cell measurement, the trigger condition for starting the cell measurement is determined by the device at the network side according to the type of the terminal, the type of the terminal is acquired by the device at the network side according to identification information of the terminal, and the type of the terminal comprises a fixed terminal or a mobile terminal; and
a starting module, configured to start the cell measurement according to the instruction.

16. A determination system for starting cell measurement, comprising: a core network, a base station and a terminal, wherein the terminal is located in a coverage area of the base station;
the core network is configured to judge, after the terminal is registered with a network, the type of the terminal according to identification information of the terminal, and send the type to the base station;
the base station is configured to receive the type sent from the core network, determine, for the terminal, a trigger condition for starting the cell measurement according to the type, and send an instruction for instructing the terminal to start the cell measurement to the terminal in the case of determining that the terminal meets the trigger condition; and
the terminal is configured to start, after receiving the instruction, the cell measurement.

17. A computer storage medium storing a computer executable instruction for implementing at least one of the determination method for starting cell measurement according to any one of claims 1 to 9 or the determination method for starting cell measurement according to any one of claims 10 to 13.
